# EUROPEAN PATENT APPLICATION

(11) **EP 4 582 397 A1**
(43) Date of publication of application: **09.07.2025**
(21) Application number: 23860044.9
(22) Date of filing: 16.08.2023
(51) Int. Cl.: C03C 27/06, C09K 3/10, E06B 3/663

(54) **MULTIPLE GLAZING, PRODUCTION METHOD THEREFOR, AND SEALING MATERIAL FOR MULTIPLE GLAZING**

(30) Priority: 31.08.2022 JP 2022137769
(71) Applicant: AGC INC., Chiyoda-ku, Tokyo 1008405 (JP)
(72) Inventor: SHIBUYA, Takashi, Tokyo 100-8405 (JP)
(74) Representative: Müller-Boré & Partner Patentanwälte PartG mbB
(86) International application number: PCT/JP2023/029580
(87) International publication number: WO 2024/048279

(57) **Abstract**

To improve molding speed and molding accuracy at corner portions, and thereby to improve productivity and production stability. A multiple glazing having two or more glass plates spaced apart to face one another via a spacer so as to form an air layer between the glass plates, wherein the spacer is formed of a thermoplastic resin composition having a JIS A hardness at 25°C of 10 or more and 90 or less; the thermoplastic resin composition contains a butyl-based rubber, a crystalline polyolefin, a drying agent and an inorganic filler; a proportion of the crystalline polyolefin to the total amount of the butyl-based rubber and the crystalline polyolefin is 2 wt% or more and 12 wt% or less; a proportion of the crystalline polyolefin to the total amount of the thermoplastic resin composition is 1 wt% or more and 5 wt% or less; the butyl-based rubber includes two or more types of butyl-based rubbers differing in the molecular weight; the butyl-based rubber has a number average molecular weight of 45000 or more and 60000 or less; the butyl-based rubber has a weight average molecular weight of 200000 or more and 225000 or less; and a ratio of the weight average molecular weight to the number average molecular weight of the butyl-based rubber is 4.0 or more and 5.0 or less.

## Description

### TECHNICAL FIELD

The present invention relates to a multiple glazing and a method for producing it, and a sealing material for the multiple glazing.

### BACKGROUND ART

Conventionally known is a multiple glazing including two or more glass plates spaced apart to face each other via only a spacer so as to form an air layer between the glass plates, wherein the spacer is formed of a thermoplastic resin composition having a JIS A hardness at 25°C of 10 to 90, the thermoplastic resin composition contains a butyl-based rubber, a crystalline polyolefin, a drying agent and an inorganic filler, the proportion of the butyl-based rubber is 50 to 98 wt% and the proportion of the crystalline polyolefin is 2 to 50 wt% to the total amount of the butyl-based rubber and the crystalline polyolefin, the proportion of the inorganic filler is 200 parts by weight or less per 100 parts by weight of the total amount of the butyl-based rubber and the crystalline polyolefin, the melt viscosity at 120°C is 0. 6 kPa·s or more and 7.0 kPa·s or less, and the storage elastic modulus at 25°C is 15MPa or more and 60 MPa or less (for example, see Patent Document 1).

According to such a multiple glazing, by using for the spacer a sealing material which can be molded at lower temperature than before, energy consumption can be reduced during production and deterioration of the sealing material can be reduced as well.

### PRIOR ART DOCUMENTS

### PATENT DOCUMENTS

Patent Document 1: WO2018/199177

### DISCLOSURE OF INVENTION

### TECHNICAL PROBLEM

However, in a case where the multiple glazing as disclosed in Patent Document 1 is to be produced, the spacer significantly deforms immediately after extrusion when melt-molded, and thus it is necessary to set restrict molding speed conditions and the productivity can hardly be improved. Further, failure in filling at corners of the spacer may occur or the corners may have thicknesses different from those of edge portions. Thus, the molding accuracy at corner portions of the spacer should still be improved.

Under these circumstances, the object of the present invention is to provide a multiple glazing with improved productivity and production stability, achieved by suppressing deformation of a spacer or a sealing material immediately after extrusion at the time of melt-molding while maintaining molding property at low temperature of 150°C or lower thereby to improve the molding speed and molding accuracy at corner portions, a method for producing it, and a sealing material for the multiple glazing.

### SOLUTION TO PROBLEM

To achieve the above object, the multiple glazing according to an embodiment of the present invention is a multiple glazing having two or more glass plates spaced apart to face one another via a spacer so as to form an air layer between the glass plates, wherein the spacer is formed of a thermoplastic resin composition having a JIS A hardness at 25°C of 10 or more and 90 or less; the thermoplastic resin composition contains a butyl-based rubber, a crystalline polyolefin, a drying agent and an inorganic filler; a proportion of the crystalline polyolefin to a total amount of the butyl-based rubber and the crystalline polyolefin is 2 wt% or more and 12 wt% or less; a proportion of the crystalline polyolefin to a total amount of the thermoplastic resin composition is 1 wt% or more and 5 wt% or less; the butyl-based rubber includes two or more types of butyl-based rubbers differing in the molecular weight; the butyl-based rubber has a number average molecular weight of 45000 or more and 60000 or less; the butyl-based rubber has a weight average molecular weight of 200000 or more and 225000 or less; a ratio of the weight average molecular weight to the number average molecular weight of the butyl-based rubber is 4.0 or more and 5.0 or less; a loss tangent at 190°C at 1Hz is 1.25 or more and 1.42 or less; the loss tangent monotonically increases without having a peak in a temperature range of 90°C to 190°C; and a melt viscosity at 150°C is 0.6 kPa·s or more and 3.5 kPa·s or less.

To achieve the above object, the sealing material for a multiple glazing according to an embodiment of the present invention is a sealing material for a multiple glazing that can be used for a spacer of a multiple glazing having two or more glass plates spaced apart to face one another to form an air layer between the glass plates, which comprises a thermoplastic resin composition having a JIS A hardness at 25°C of 10 or more and 90 or less, wherein the thermoplastic resin composition contains a butyl-based rubber, a crystalline polyolefin, a drying agent and an inorganic filler; a proportion of the crystalline polyolefin to a total amount of the butyl-based rubber and the crystalline polyolefin is 2 wt% or more and 12 wt% or less; a proportion of the crystalline polyolefin to a total amount of the thermoplastic resin composition is 1 wt% or more and 5 wt% or less; the butyl-based rubber includes two or more types of butyl-based rubbers differing in the molecular weight; the butyl-based rubber has a number average molecular weight of 45000 or more and 60000 or less; the butyl-based rubber has a weight average molecular weight of 200000 or more and 225000 or less; a ratio of the weight average molecular weight to the number average molecular weight of the butyl-based rubber is 4.0 or more and 5.0 or less; a loss tangent at 190°C at 1Hz is 1.25 or more and 1.42 or less; the loss tangent monotonically increases without having a peak in a temperature range of 90°C to 190°C; and a melt viscosity at 150°C is 0.6 kPa·s or more and 3.5 kPa·s or less.

To achieve the above object, the method for producing a multiple glazing according to an embodiment of the present invention is a method for producing a multiple glazing, which comprises a step of disposing two glass plates so as to face each other, and a step of filling a material of a spacer at a temperature of 150°C or lower in a predetermined region between the two glass plates, wherein the spacer is formed of a thermoplastic resin composition having a JIS A hardness at 25°C of 10 or more and 90 or less; the thermoplastic resin composition contains a butyl-based rubber, a crystalline polyolefin, a drying agent and an inorganic filler; a proportion of the crystalline polyolefin to a total amount of the butyl-based rubber and the crystalline polyolefin is 2 wt% or more and 12 wt% or less; a proportion of the crystalline polyolefin to a total amount of the thermoplastic resin composition is 1 wt% or more and 5 wt% or less; the butyl-based rubber includes two or more types of butyl-based rubbers differing in the molecular weight; the butyl-based rubber has a number average molecular weight of 45000 or more and 60000 or less; the butyl-based rubber has a weight average molecular weight of 200000 or more and 225000 or less; a ratio of the weight average molecular weight to the number average molecular weight of the butyl-based rubber is 4.0 or more and 5.0 or less; a loss tangent at 190°C at 1Hz is 1.25 or more and 1.42 or less; the loss tangent monotonically increases without having a peak in a temperature range of 90°C to 190°C; and a melt viscosity at 150°C is 0.6 kPa·s or more and 3.5 kPa·s or less.

### ADVANTAGEOUS EFFECTS OF INVENTION

According to the present invention, the spacer and the sealing material of the multiple glazing can be molded at low temperature of 150°C or lower and its deformation immediately after extrusion at the time of melt-molding can be suppressed. Thus, the molding speed and the molding accuracy at corner portions can be improved, and the productivity and the production stability can be improved.

### BRIEF DESCRIPTION OF DRAWINGS

Fig. 1 is a partial cross sectional view schematically illustrating an example of the configuration of a multiple glazing according to a first embodiment of the present invention.
Fig. 2 is a view illustrating an example of a multiple glazing according to a second embodiment of the present invention.
Fig. 3 is a view illustrating an example of a glass plate disposition step in the method for producing the multiple glazing.
Fig. 4 is a view illustrating an example of an extruder.
Fig. 5 is views illustrating steps in a first method for producing the multiple glazing according to the second embodiment of the present invention.
Fig. 6 is views illustrating a second method for producing the multiple glazing according to the second embodiment of the present invention.
Fig. 7 is views illustrating a third method for producing the multiple glazing according to the second embodiment of the present invention.

### DESCRIPTION OF EMBODIMENTS

Now, embodiments for carrying out the present invention will be described with reference to the drawings.

### [First embodiment]

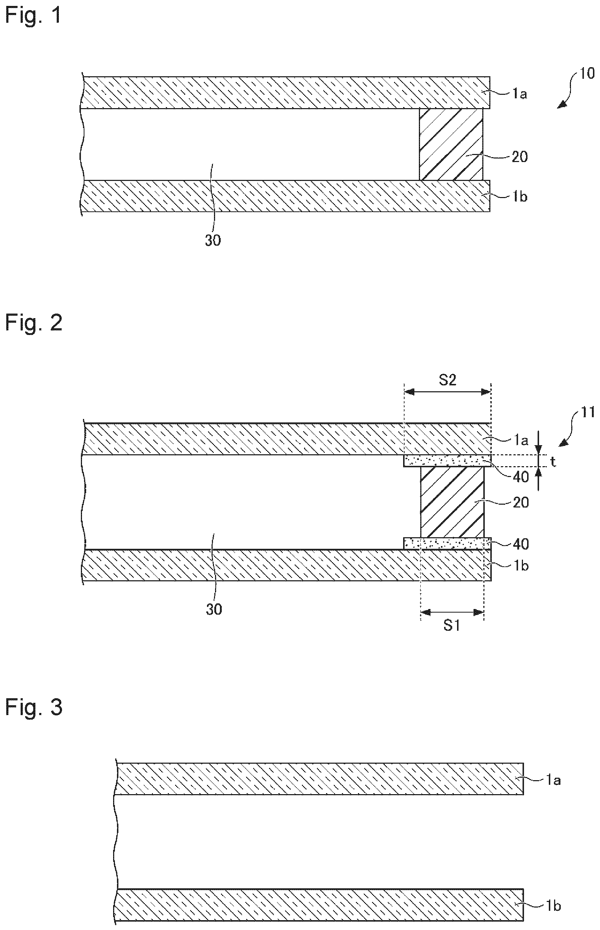

Fig. 1 is a partial cross sectional view schematically illustrating an example of the configuration of a multiple glazing according to a first embodiment of the present invention. As shown in Fig. 1, a multiple glazing 10 has two glass plates 1a and 1b held with a certain distance only via a spacer 20 so as to form an air layer 30 between the glass plates. The spacer 20 is formed of a thermoplastic resin composition having a JIS A hardness of 10 to 90, a loss tangent at 190°C at 1Hz of 1.25 or more and 1.42 or less, having a loss tangent which monotonically increases without having a peak in a temperature range of 90°C to 190°C, and having a melt viscosity at 150°C of 0.6 kPa·s or more and 3.5 kPa·s or less. The wording "only via a spacer 20" means that a secondary sealing material, a metal-made spacer or the like is not necessary, and primer treatment that is applied as the case requires is included. Further, the air layer 30 is preferably filled with an inert gas. The inert gas may be an insulating gas with a lower thermal conductivity than the air, such as krypton (Kr) gas or argon (Ar) gas.

In Fig. 1, in the multiple glazing 10, the spacer 20 is provided between the two glass plates 1a and 1b facing each other, and the spacer 20 is formed by a melt-molding method such as extrusion or injection molding. When such extrusion or injection molding is carried out, the molten thermoplastic resin composition is extruded or injected from an extruder, an applicator or an injection molding machine. In a case where the thermoplastic resin composition as a material of the spacer has a high viscosity, the spacer material cannot be melt-molded unless heated to high temperature of 200°C or higher, and can hardly be extruded or injected from a molding machine. By such molding at high temperature of 200°C or higher, the butyl-based rubber reaches close to the heat decomposition temperature, and thus when the butyl-based rubber is exposed to a high temperature state for long time e.g. due to troubles at the time of molding, the butyl-based rubber tends to decompose, thus leading to decrease of physical strength and decrease of gas barrier property.

On the other hand, at a temperature of 150°C or lower, the butyl-based rubber does not reach the heat decomposition temperature and hardly thermally decomposes, and physical strength of the butyl-based rubber after molded is maintained and the gas barrier property will not decrease. The temperature of the thermoplastic resin composition may be set at any temperature so long as it is 150°C or lower, and for example, it may be set at a predetermined temperature within a range of 110 to 150°C. Specifically, it may be set at a temperature of 120 to 145°C.

When the melt viscosity at 150°C of the thermoplastic resin composition to be used for the spacer material is set to be within a range of 0.6 kPa·s or more and 3.5 kPa·s or less, by using an appropriate pressure unit, an amount of extrusion of the spacer material sufficient for high speed molding can be secured even at a temperature of 150°C or lower. This shortens the tact time and can achieve cost reduction also from the viewpoint of energy saving at the time of production. Further, since molding is possible without exposing the spacer material to high temperature, heat deterioration of the spacer material itself at the time of molding can be reduced, and long term reliability can be improved.

With a view to keeping flowability of the thermoplastic resin composition at the time of melt-molding and reducing loads on the molding machine, the melt viscosity of the thermoplastic resin composition at 150°C is preferably 3.5 kPa·s or less, more preferably 3.0 kPa·s or less, further preferably 2.8 kPa·s or less. With a view to easily forming the thermoplastic resin composition into a certain shape at the time of melt-molding, the melt viscosity of the thermoplastic resin composition at 150°C is preferably 0.6 kPa·s or more, more preferably 1.0 kPa·s or more, further preferably 1.5 kPa·s or more. The melt viscosity is a viscosity measured in accordance with the method specified by JIS K7199:1999 at a temperature of 150°C at a shear rate of 100/s using a capillary rheometer having a capillary with a capillary length of 10 mm and a capillary diameter of 2 mm and a furnace with a furnace diameter of 9.55 mm.

The loss tangent tanδ of the thermoplastic resin composition to be used for the spacer material at 190°C at 1Hz is equivalent to the loss tangent at 150°C at high frequency, and is an index of the shape holding property of the spacer material immediately after extrusion at the time of melt-molding. When the loss tangent tanδ of the thermoplastic resin composition to be used for the spacer material at 190°C at 1Hz is set to be within a range of 1.25 or more and 1.42 or less, it is possible to improve the shape forming property of the thermoplastic resin composition at corner portions immediately after extrusion and to suppress the viscous flow deformation at the same time, and to improve the molding accuracy at the corner portions. With a view to achieving an appropriate corner shape of the corner portions immediately after extrusion, the loss tangent tanδ of the thermoplastic resin composition at 190°C at 1Hz is preferably 1.25 or more, more preferably 1.26 or more, further preferably 1.27 or more. With a view to suppressing the viscous flow deformation immediately after extrusion at the time of melt-molding, the loss tangent tanδ of the thermoplastic resin composition at 190°C at 1Hz is preferably 1.42 or less, more preferably 1.41 or less, further preferably 1.40 or less.

The loss tangent is measured in accordance with JIS K6394:2007. In Examples, the loss tangent tanδ was measured with respect to a sample with a diameter of 25 mm and a thickness of 0.6 mm using a viscoelasticity measurement apparatus MCR301 manufactured by Anton Paar, in shear mode at a temperature of 190°C at a frequency of 1 Hz with a strain of 5%. The loss tangent tanδ is a value obtained by dividing the loss elastic modulus G" by the storage elastic modulus G'. A loss tangent tanδ closer to 0 indicates that the sample has properties closer to an elastic body, and a higher loss tangent tanδ indicates that the sample has properties closer to a viscous body.

When the loss tangent tanδ of the thermoplastic resin composition at 190°C at 1Hz is 1.25 or more and 1.42 or less, it is possible to improve the shape forming property of the thermoplastic resin composition at corner portions and to suppress the viscous flow deformation at the time of melt-molding, at the same time. Thus, it is possible to expand the range of production conditions and to realize improvement of the productivity.

Further, the loss tangent of the thermoplastic resin composition to be used for the spacer material preferably monotonically increases without having a peak, within a temperature range of 90°C to 190°C. In such a case, as the temperature increases, the loss tangent increases and thus, the thermoplastic resin composition becomes flexible and the shape controlling property improves. If the loss tangent has a peak (local maximum value), the resin composition has high flowability at the peak temperature or higher and its shape can hardly be controlled immediately after extrusion, however, by the loss tangent having no peak in a temperature range of 90°C to 190°C, the viscous flow deformation immediately after extrusion at the time of melt-molding can be suppressed.

Further, when the loss tangent tanδ of the thermoplastic resin composition to be used for the spacer material at 150°C at 1Hz is set to be within a range of 1.08 or more and 1.27 or less, it is possible to improve the press property and to control cooling deformation after melt-molding, at the same time. In order that the thermoplastic resin composition is securely pressed into a desired shape when pressed and its deformation is suppressed, the loss tangent tanδ of the thermoplastic resin composition at 150°C is preferably 1.08 or more, more preferably 1.10 or more, further preferably 1.12 or more. In order to suppress deformation after extrusion at the time of melt-molding, the loss tangent tanδ of the thermoplastic resin composition at 150°C at 1Hz is preferably 1.27 or less, more preferably 1.24, further preferably 1.22 or less.

Now, various examples of specific thermoplastic resin compositions that can be used for the multiple glazing 10 according to the present embodiment will be described below.

The thermoplastic resin composition used in the present invention contains a butyl-based rubber, a crystalline polyolefin, a drying agent and an inorganic filler.

The butyl-based rubber may be a homopolymer of isobutylene or its copolymer with another monomer, or a modified product thereof, and may be used alone or in combination of two or more. The copolymer is preferably a copolymer with a relatively small amount of isoprene (one usually called butyl rubber). The modified product may be a halogenated butyl rubber or a partially crosslinked butyl rubber. Particularly preferred as the butyl-based rubber are a polyisobutylene, a copolymer of isobutylene and isoprene, which is usually called butyl rubber, and a partially crosslinked butyl rubber. In order to prevent infiltration of moisture into the air layer of the multiple glazing when constituted, the water vapor permeability coefficient of the butyl-based rubber is preferably 3000×10⁻¹³ cm³·cm/(cm²·sec·Pa) or lower, more preferably 500×10⁻¹³ cm³·cm/(cm²·sec·Pa) or lower.

The crystalline polyolefin is particularly preferably a polyethylene. A polyethylene, which has a melting point of about 100°C, can be melted and solidified at room temperature when melt-molded at low temperature of 110 to 150°C. In order to prevent infiltration of moisture into the air layer of the multiple glazing when constituted, the water vapor permeability coefficient of the crystalline polyolefin is preferably 3000×10⁻¹³ cm³·cm/(cm²·sec·Pa) or lower, more preferably 500×10⁻¹³ cm³·cm/(cm²·sec·Pa) or lower. The crystalline polyolefin contributes to holding the shape of the spacer.

The thermoplastic resin composition may contain, in addition to the butyl-based rubber, a hot melt-moldable rubber or elastomer. Further, it may contain, as a low moisture permeable thermoplastic resin, a polyethylene, a polypropylene, vinylidene chloride, a polyvinyl chloride or the like, a copolymer of a monomer constituting such a polymer, or a modified product thereof. Further, a blend of such a thermoplastic resin composition with a so-called plasticizer such as dibutyl phthalate or di-2-ethylhexyl phthalate is also included in "the thermoplastic resin composition" of the present invention so long as it has the above properties.

The drying agent may be any drying agent to be used as mixed with a spacer or a sealing material of a conventional multiple glazing, such as zeolite, alumina or silica gel. By a predetermined amount of the drying agent being incorporated in the thermoplastic resin composition, it is possible to prevent infiltration of moisture into the air layer of the multiple glazing when constituted.

As the inorganic filler, ones commonly used as the inorganic filler, such as calcium carbonate, talc, mica or carbon black, may be used alone or in combination of two or more. By incorporating the inorganic filler, it is possible to realize a high hardness thermoplastic resin composition.

Such a thermoplastic resin composition for the spacer contains the above components as preferred components, and an additive such as a tackifier, a lubricant, a pigment, an antistatic agent, an age resister, a thermal stabilizer, a filler or a blowing agent, may be incorporated with the thermoplastic resin as the case requires.

The resin composition for the spacer may be prepared by kneading the above components. For its preparation, it is important that required components are blended so that the obtained thermoplastic resin composition has a JIS A hardness at 25°C of 10 or more and 90 or less. The JIS A hardness is a hardness measured by type A durometer in accordance with JIS K7215:1986.

When a thermoplastic resin composition having a JIS A hardness at 25°C of 90 or less is used for the spacer of the multiple glazing, it is possible to suppress concentration of a stress caused by air expansion at high temperature on the adhesion interface between the glass plate and the spacer, by some deformation of the spacer, in a durability test as shown in JIS R3209. Thus, even in a case where the adhesion is somewhat low, separation of the glass and the spacer is suppressed, and in a case where the adhesion is strong, it is possible to prevent breakage of the glass. Even in a case where the JIS A hardness is larger than 90, it is possible to achieve adhesion required to withstand a stress caused by expansion of the air layer, by applying high temperature or high pressure, however, the glass may be broken by the high temperature or the high pressure, whereby the productivity may be remarkably impaired, or in a case where the adhesion is significant, the glass may be broken when the applied stress exceeds the allowable stress.

On the other hand, when the JIS A hardness at 25°C of the thermoplastic resin composition is 10 or more, the shape retention of the multiple glazing can be ensured. If the thermoplastic resin composition has a relatively small hardness even though having a JIS A hardness at 25°C of 10 or more, slippage may sometimes occur if the air layer is thick.

A commonly used multiple glazing has an air layer with a thickness at a level of 4 to 18 mm, and in many cases with a thickness of 6 mm or 12 mm. Accordingly, in a case where the thermoplastic resin composition has a relatively small hardness, even though slippage may not occur in the multiple glazing having an air layer with a thickness of 6 mm, slippage may occur with a thickness of 12 mm. By the thermoplastic resin composition having a JIS A hardness at 25°C of 40 or more, it is possible to prevent slippage even in the multiple glazing having an air layer with a thickness of 12 mm. Accordingly, the JIS A hardness of the thermoplastic resin composition to be used for the spacer in the multiple glazing in the present invention is particularly preferably 40 or more.

In the multiple glazing using for the spacer a resin composition having a JIS A hardness exceeding 90, a large stress is applied to the glass plate. Accordingly, in either multiple glazing using glass plates with a thickness of 5 mm or 3 mm as specified by JIS R3209, glass breakage will occur in an accelerated durability test.

Whereas in the multiple glazing using for the spacer a resin composition having a JIS A hardness of 90, no glass breakage will occur in the above test when glass plates with a thickness of 5 mm are used. Whereas in the multiple glazing using glass plates with a thickness of 3 mm, there is a possibility of glass breakage in the above test. Accordingly, the upper limit of the JIS A hardness of the resin composition for the spacer is 90. In the multiple glazing using for the spacer a resin composition having a JIS A hardness of 85, no glass breakage will occur in the above test when glass plates with a thickness of either 5 mm or a thickness of 3 mm are used. Glass plates commonly used for the multiple glazing have a thickness of 3 mm, and thus the JIS A hardness of the resin composition for the spacer is more suitably within a range of 40 to 85.

The water vapor permeability coefficient of the resin composition as a whole is 5000×10⁻¹³ cm³·cm/(cm²·sec·Pa) or less, and to maintain the dewpoint performance, the water vapor permeability coefficient is preferably 500×10⁻¹³ cm³·cm/(cm²sec·Pa) or lower.

The thermoplastic resin composition to be used for the multiple glazing 10 according to the first embodiment of the present invention is preferably one containing the butyl-based rubber, the crystalline polyolefin, the drying agent and the inorganic filler, the proportion of the crystalline polyolefin to the total amount of the butyl-based rubber and the crystalline polyolefin being 2 to 12 wt% and the proportion of the crystalline polyolefin to the total amount of the thermoplastic resin composition being 1 wt% or more and 5 wt% or less.

To adjust the loss tangent at 190°C at 1Hz to be 1.25 or more and 1.42 or less and to adjust the melt viscosity at 150°C to be 0.6 kPa·s or more and 3.5 kPa·s or less, as described above, adjusting the molecular weight of the butyl-based rubber may be mentioned.

The thermoplastic resin composition used as a material of the spacer 20 of the multiple glazing 10 according to the present embodiment contains the butyl-based rubber. The butyl-based rubber contained in the thermoplastic resin composition preferably comprises two or more types of butyl-based rubbers differing in the molecular weight. Butyl-based rubbers differing in the molecular weight, which have the same chemical structure, have the same gas permeability, chemical resistance, etc., but have different physical properties such as melt viscosity and loss tangent due to the difference in the molecular weight. Thus, by two or more types of butyl-based rubbers differing in the molecular weight being used, the melt viscosity and the loss tangent can readily be adjusted to be within an appropriate range.

With a view to suppressing deformation immediately after extrusion at the time of melt-molding, the number average molecular weight of the butyl-based rubber is preferably 45000 or more, more preferably 45500 or more, further preferably 46000 or more. With a view to maintaining flowability at the time of molding, the number average molecular weight of the butyl-based rubber is preferably 60000 or less, more preferably 55000 or less, further preferably 55000 or less. By the number average molecular weight of the butyl-based rubber being 45000 or more and 60000 or less, it is possible to suppress deformation immediately after extrusion at the time of melt-molding and to increase the molding speed while maintaining flowability at the time of molding, whereby improvement of the productivity can be realized.

With a view to suppressing deformation immediately after extrusion at the time of melt-molding, the weight average molecular weight of the butyl-based rubber is preferably 200000 or more, more preferably 203000 or more, further preferably 206000 or more. With a view to improving the molding accuracy at corner portions, the weight average molecular weight of the butyl-based rubber is preferably 225000 or less, more preferably 223000 or less, further preferably 220000 or less. By the weight average molecular weight of the butyl-based rubber being 200000 or more and 225000 or less, molding accuracy at corner portions can be improved while suppressing deformation after extrusion at the time of melt-molding, whereby improvement of the productivity can be realized.

In order to suppress deformation immediately after extrusion at the time of melt-molding while maintaining flowability at the time of molding, the ratio of the weight average molecular weight to the number average molecular weight of the butyl-based rubber is preferably 4.0 or more and 5.0 or less. The ratio of the weight average molecular weight to the number average molecular weight of the butyl-based rubber is more preferably 4.1 or higher, more preferably 4.2 or higher. Further, the ratio of the weight average molecular weight to the number average molecular weight of the butyl-based rubber is more preferably 4.9 or less, more preferably 4.8 or less.

The butyl-based rubber preferably comprises one or more types of high molecular weight butyl-based rubbers and one or more types of low molecular weight butyl-based rubbers. The high molecular weight butyl-based rubber is a block-shaped solid that exhibits elastomeric properties. On the other hand, the low molecular weight butyl-based rubber exhibits viscous liquid and adhesive properties. In the multiple glazing 10 according to the present embodiment, in order to properly suppress deformation after extrusion at the time of melt-molding while maintaining moldability at low temperature, differences in physical properties due to the molecular weight of the butyl-based rubber is utilized.

In order to reduce the melt viscosity, because the molecular weight of the high molecular weight butyl-based rubber has a significant influence, and thus in selection of the high molecular weight butyl-based rubber, it is preferred to use a lower molecular weight side material within a range where physical properties of a high molecular weight butyl-based rubber (elastomeric properties, high elasticity) are achieved. Specifically, the number average molecular weight of the high molecular weight butyl-based rubber is preferably 55000 or more, more preferably 56000 or more, further preferably 57000 or more. The number average molecular weight of the high molecular weight butyl-based rubber is preferably 120000 or less, more preferably 100000 or less, further preferably 80000 or less. The weight average molecular weight of the high molecular weight butyl-based rubber is preferably 200000 or more, more preferably 250000 or more, further preferably 300000 or more. The weight average molecular weight of the high molecular weight butyl-based rubber is preferably 650000 or less, more preferably 550000 or less, further preferably 500000 or less.

When a lower molecular weight butyl-based rubber among high molecular weight butyl-based rubbers is selected as the high molecular weight butyl-based rubber, a decrease of the elastic modulus at room temperature my occur, and a problem in the shape retention as the multiple glazing, for example slippage, may occur. Accordingly, in order to lower the melt viscosity and to maintain the elastic modulus at room temperature, in selection of the low molecular weight butyl-based rubber, it is preferred to select a higher molecular weight side material within a range where physical properties of the low molecular weight butyl-based rubber (high viscosity) are achieved. Specifically, the number average molecular weight of the low molecular weight butyl-based rubber is preferably 15000 or more, more preferably 18000 or more, further preferably 20000 or more. The number average molecular weight of the low molecular weight butyl-based rubber is preferably 50000 or less, more preferably 40000 or less, further preferably 35000 or less. Further, the weight average molecular weight of the low molecular weight butyl-based rubber is preferably 30000 or more, more preferably 40000 or more, further preferably 50000 or more. The weight average molecular weight of the low molecular weight butyl-based rubber is preferably 150000 or less, more preferably 120000 or less, further preferably 90000 or less.

The high molecular weight butyl-based rubber and the low molecular weight butyl-based rubber may be blended in such a blend ratio that the number average molecular weight of the butyl-based rubber is 45000 or more and 60000 or less, and the weight average molecular weight of the butyl-based rubber is 200000 or more and 225000 or less.

The proportion of the butyl-based rubber to the total amount of the thermoplastic resin composition is preferably 30 wt% or higher, more preferably 32 wt% or higher, further preferably 33 wt% or higher. The proportion of the butyl-based rubber to the total amount of the thermoplastic resin composition is preferably 40 wt% or lower, more preferably 38 wt% or lower, further preferably 37 wt% or lower. When the proportion of the butyl-based rubber to the thermoplastic resin composition is 30 wt% or higher and 40 wt% or lower, it is possible to suppress deformation immediately after extrusion at the time of melt-molding while maintaining moldability at low temperature.

By selecting materials for the butyl-based rubber as above, it is possible to suppress deformation immediately after extrusion at the time of melt-molding while maintaining moldability at low temperature and to improve the molding speed and the molding accuracy at corner portions, whereby improvement of the productivity and the production stability of the spacer 20 and the multiple glazing 10 having the spacer 20 can be realized.

Now, materials other than the butyl-based rubber will be described.

The crystalline polyolefin means a homopolymer or a copolymer with another monomer of an olefin such as ethylene or propylene, or a modified product thereof, having crystallinity. The polymer preferably has a syndiotactic or isotactic structure but may include another structure. The olefin is particularly preferably ethylene or propylene.

The copolymer may be a copolymer of two or more types of olefins or a copolymer of an olefin with another monomer, and is properly a copolymer of ethylene or propylene and another monomer which does not impair crystallinity. The copolymer is properly a block copolymer rather than an alternating copolymer or a random copolymer. The modified product may be a crystalline polyolefin having a functional group such as an acid anhydride group, a carboxy group or an epoxy group introduced.

The crystalline polyolefin is a polyethylene or a polypropylene, which is a substantial homopolymer. For example, the polyethylene may be a low density polyethylene, an intermediate density polyethylene or a high density polyethylene. The degree of crystallization of the crystalline polyolefin is preferably 30 wt% or more, particularly preferably 50 wt% or more. For example, a typical degree of crystallization of a conventional crystalline polyolefin is 50 to 60 wt% in the case of a low density polyethylene, 75 to 90 wt% in the case of a high density polyethylene, and 55 to 65 wt% in the case of a polypropylene. The molecular weight is not particularly limited, and preferred are a polyethylene having a number average molecular weight of about 200000 800000 and a polypropylene having a number average molecular weight of about 100000 to 400000.

As described above, a polyethylene and a polypropylene, which has high crystallinity, has lower moisture permeability than the butyl-based rubber. Particularly, one having a lower melt viscosity, as compared with a butyl-based rubber alone, decreases the melt-viscosity of the obtained composition and improves molding properties. This makes it possible to blend various inorganic fillers and to realize a high hardness resin composition for the spacer, and such is particularly preferred from economical viewpoint.

With a view to realizing high hardness of the butyl-based rubber, the proportion of the crystalline polyolefin to the total amount of the butyl-based rubber and the crystalline polyolefin in the thermoplastic resin composition is preferably 2 wt% or higher, more preferably 4 wt% or higher, further preferably 5 wt% or higher. In order that the butyl-based rubber exhibits its properties and surface roughening of the thermoplastic resin composition is suppressed, the proportion of the crystalline polyolefin to the total amount of the butyl-based rubber and the crystalline polyolefin in the thermoplastic resin composition is preferably 12 wt% or lower, more preferably 10 wt% or lower, further preferably 9 wt% or lower.

In order to keep a certain loss tangent tanδ at 190°C at 1 Hz of the thermoplastic resin composition, the proportion of the crystalline polyolefin to the total amount of the thermoplastic resin composition is preferably 1 wt% or higher, more preferably 1.5 wt% or higher, further preferably 1.8 wt% or higher. With a view to securing sufficient adhesion of the thermoplastic resin composition, the proportion of the crystalline polyolefin to the total amount of the thermoplastic resin composition is preferably 5 wt% or lower, more preferably 4 wt% or lower, further preferably 3.5 wt% or lower.

By the thermoplastic resin composition containing the inorganic filler, the proportion of the crystalline polyolefin to the total amount of the butyl-based rubber and the crystalline polyolefin is low. For example, in a case where the proportion of the inorganic filler to the total amount of the thermoplastic resin composition is 20 wt% or higher, the effects of the present invention are sufficiently achieved when the proportion of the crystalline polyolefin to the total amount of the butyl-based rubber and the crystalline polyolefin is 2 to 12 wt%. The proportion of the inorganic filler to the total amount of the thermoplastic resin composition is preferably 20 wt% or higher, more preferably 25 wt% or higher, further preferably 30 wt% or higher. On the other hand, in order to suppress the melt viscosity of the thermoplastic resin composition and to secure tensile strength and tear strength, the proportion of the inorganic filler to the total amount of the thermoplastic resin composition is preferably 50 wt% or lower, more preferably 45 wt% or lower, further preferably 40 wt% or lower.

As the inorganic filler, ones conventionally used as an inorganic filler, such as calcium carbonate, talc, mica and carbon black, may be used alone or in combination of two or more.

It is very effective that, at least before the thermoplastic resin composition is used for the final application, the butyl-based rubber and the crystalline polyolefin contained in the thermoplastic resin composition are mixed at high temperature. The high temperature here means a temperature equal to the crystalline melting point of the crystalline polyolefin or higher. The mixing temperature should be equal to the decomposition point of the butyl-based rubber or lower, and is preferably about 300°C or lower which is the decomposition point of a conventional butyl-based rubber. It is preferably 200°C or lower particularly in view of productivity. Accordingly, the crystalline melting point of the crystalline polyolefin is also preferably 200°C or lower.

The thermoplastic resin composition for the spacer is more preferably such that its hardness change is as small as possible within its use temperature. In order to satisfy such a requirement, the crystalline polyolefin is preferably one having a crystalline melting point at the usual maximum use temperature or higher. The usual maximum use temperature of a resin material for buildings is about 80°C.

By the crystalline polyolefin being bound by cohesion by the crystalline phase, even in a temperature range exceeding the glass transition temperature, a rapid decrease of the hardness or the flowable state seen in an amorphous resin, does not occur at the crystalline melting point or lower. On the other, the melt viscosity remarkably decreases at the crystalline melting point, and an effect to obtain favorable kneading property with the butyl-based rubber can be expected.

In such a thermoplastic resin composition, a tackifier, a drying agent or an additive such as carbon black or talc, which can be commonly blended with a resin material for a spacer, can be blended. Particularly in a case where the resin composition is used for the spacer, a drying agent such as zeolite, silica gel or alumina, a tackifier, a plasticizer, a silane coupling agent or a stabilizer is preferably blended.

It is particularly preferred to blend a drying agent such as zeolite with the thermoplastic resin composition in an amount of 5 wt% or more and 30 wt% or less. The drying agent preferably contains zeolite with a pore size of 3Å (3A zeolite) in an amount of 50 wt% or more. The 3A type drying agent adsorbs H₂O with an effective diameter of 0.3 nm or smaller, whereas does not adsorb N₂ and O₂ with an effective diameter larger than 0.3 nm. Thus, even if the spacer 20 or the multiple glazing 10 having the spacer 20 is stored in the air in a dry state, gas contamination can be reduced, and the inert gas concentration in the air layer 30 can be kept high.

In order to achieve adhesion-imparting effect and plasticizing effect, it is also preferred to incorporate a polyisobutylene in the butyl-based rubber in an amount of 200 parts by weight or less, particularly 5 parts by weight or more and 150 parts by weight or less per 100 parts by weight of the butyl-based rubber other than the polyisobutylene. In this case, the butyl-based rubber other than the polyisobutylene is usually preferably a butyl rubber. Further, a tackifier may be incorporated. By incorporating a tackifier, it is possible to control temperature-dependent viscoelastic properties. As the tackifier, a commonly known compound may be used, and from the viewpoint of weather resistance, a compound having less ultraviolet absorbing structure is suitable. Particularly, a hydrogenated dicyclopentadiene-based tackifier is preferred from the viewpoint of weather resistance.

The additive may be blended in an amount of 0 wt% or more and 5 wt% or less. The additive here means, for example, a lubricant, a pigment, an antistatic agent, a tackifier, a plasticizer, an age resister, a thermal stabilizer, an antioxidant, a hydrolysable silyl group-containing compound such as a silane coupling agent, a blowing agent, and a filler including an inorganic filler, and the term "additive" used elsewhere means additives excluding an inorganic filler and including a tackifier.

In summary, the blend ratio of the components of the particularly preferred resin composition for the spacer is such that the butyl-based rubber is 30 wt% or more and 65 wt% or less, the crystalline polyolefin is 1 wt% or more and 5 wt% or less, the inorganic filler is 30 wt% or more and 40 wt% or less, and the drying agent is 5 wt% or more and 30 wt% or less, the proportion of the crystalline polyolefin to the total amount of the butyl-based rubber and the crystalline polyolefin is 2 to 12 wt%, and the butyl-based rubber comprises two or more types of butyl-based rubbers differing in the molecular weight.

The resin composition is produced, as described about, preferably by mixing at least the butyl-based rubber and the crystalline polyolefin at a temperature equal to the crystalline melting point of the crystalline polyolefin or higher and equal to the decomposition point of the butyl-based rubber or lower. The mixing temperature is preferably 100 to 200°C, particularly preferably 120 to 180°C. Other compounds and additives may be mixed at the same time, or may be mixed before or after the mixing.

The composition in the present invention is a substantially thermoplastic composition and can be mixed by a conventional mixing machine such as a melt-mix extruder or a kneader. Further, molding may be conducted successive to the mixing operation. Further, the composition may be produced and formed into a molding material such as pellets, which are then molded. The molding method may be melt-molding such as extrusion or injection molding.

Further, successive to the molding operation, the molded product may be disposed at edges of two or more glass plates disposed to face one another as multiple glazing components to produce a multiple glazing. In such a case, by using a high temperature composition discharged from the molding machine, high adhesion to the glass plates can be obtained. Further, the composition may be applied to the multiple glazing components, while suppressing a temperature decrease of the composition using an apparatus such as an applicator. Such an apparatus is preferably one capable of heating.

The resin composition for the spacer in the present invention is not limited to the above blend ratio and proportion, however, with the above blend ratio, a spacer having a JIS A hardness, a loss tangent and a melt viscosity preferred in the present invention can be obtained.

The glass plate used for the multiple glazing of the present invention may, for example, a glass plate for a window or a door which is widely used for buildings and vehicles, a tempered glass, a laminated glass, a metal wire mesh glass, a heat-absorbing glass, a glass plate thinly coated with a metal or another inorganic substance, such as a heat reflective glass or a low emissivity glass, an acrylic resin plate called organic glass, or a polycarbonate plate and is not particularly limited.

The multiple glazing may be constituted by two glass plates or may be constituted by three or more glass plates.

### [Second embodiment]

Fig. 2 is a view illustrating an example of a multiple glazing 11 according to a second embodiment of the present invention. The multiple glazing 11 according to the second embodiment differs from the multiple glazing 10 according to the first embodiment in that it has an adhesive layer 40 between the glass plates 1a, 1b and the spacer 20. Like this, the multiple glazing 11 according to the second embodiment of the present invention is formed by applying an adhesive dissolved in a solvent to glass plates which the spacer 20 touches. The adhesive layer 40 is preferably provided from the viewpoint of long-term reliability. Constituents other than the adhesive layer 40 are the same as those of the multiple glazing 10 according to the first embodiment, and the corresponding constituents are designated by the same reference symbols and their explanation is omitted.

As shown in Fig. 2, the adhesive layer 40 may be provided on a wider region S2 than a region S1 on which the spacer 20 is provided, whereby adhesion between the spacer 20 and the glass plates 1a, 1b can be secured. In Fig. 2, the adhesive layer 40 is drawn thick for easy understanding, however, the thickness t of the adhesive layer 40 may be for example 50 µm or less, to the thickness of the spacer at a level of 6 mm or 12 mm, and may be specifically 20 µm to 30 µm. Further, in a case where the adhesive layer 40 is constituted as thin as possible within a range where the adhesion can be secured, the thickness of the adhesive layer 40 may be a level of 1 µm to 20 µm, for example 5 µm. In a case where the adhesive layer 40 is constituted to have a small thickness t, the thickness is preferably 2 µm to 10 µm, more preferably 3 to 7 µm.

The thermoplastic resin composition constituting the spacer material is hydrophobic and the glass plates 1a are 1b are hydrophilic, and thus it is required to secure adhesion between them. So long as the adhesion between them is secured, various adhesives can be used. For example, from the viewpoint of weather resistance and adhesion, a urethane-based adhesive formed of a polyol having no aromatic ring structure, a non-yellowing isocyanate and a derivative of a non-yellowing isocyanate, may be used. The urethane-based adhesive should contain at least a polyol and an isocyanate, and may further contain a silane coupling agent as the case requires to secure adhesion to the glass plates. The polyol may be the above polyol containing no aromatic ring structure, or a polyester polyol or a polyacrylic polyol, or may be a urethane resin obtained by reacting a polyol with a non-yellowing isocyanate. The isocyanate may be a non-yellowing isocyanate or may be a derivative of a non-yellowing isocyanate. Accordingly, the urethane-based adhesive contains at least one of a polyester polyol, a polyacrylic polyol, a polyol having no aromatic ring structure and a urethane resin obtained by reacting a polyol with a non-yellowing isocyanate, and at least one of a non-yellowing isocyanate and a derivative of a non-yellowing isocyanate, and may further include a silane coupling agent or the like as the case requires. A polyol means a multifunctional alcohol having one or more hydroxy groups in one molecule.

The polyol contained in the urethane-based adhesive preferably has a glass transition point Tg of higher than 20°C, whereby initial strength at the time of bonding can be secured, and slippage when the butyl-based rubber at high temperature and the glass plates are bonded can be prevented or suppressed. The molecular weight of the polyol is preferably within a range of 2000 or more and 50000 or less, whereby long term reliability of e.g. heat resistance and weather resistance can be secured. The acid value of the polyol is preferably less than 3 KOHmg/g, whereby the stability and the workability of the solution of the adhesive can be secured. The acid value is the amount (mg) of potassium hydroxide required to neutralize free fatty acids present in 1 g of the polyol and indicates the degree of purification of the polyol. A lower acid value indicates a higher degree of purification.

The adhesive to bond the thermoplastic resin composition containing the butyl-based rubber to be the material of the spacer 20, and the glass plates 1a, 1b, may be an adhesive constituted by a combination of (A) a mixture of a terminal-reactive oligomer having as repeating units bivalent C₄ hydrocarbon groups, with a compound reactive with the terminal functional group of the oligomer; and (B) a reaction product of a terminal-reactive oligomer having as repeating units bivalent C₄ hydrocarbon groups, with a compound reactive with the terminal functional group of the oligomer.

For example, the terminal-reactive oligomer having as repeating units bivalent C₄ hydrocarbon groups, is an oligomer having repeating units derived from a C₄ hydrocarbon monomer and having at its terminal a reactive functional group such as a hydroxy group, a carboxy group, an amino group, a mercapto group, an epoxy group or an isocyanate group. This is a compound to be a high molecular weight polymer which functions as an adhesive by being reacted with a compound having a functional group reactive with the functional group for chain extension or crosslinking.

The lower limit of the molecular weight of the terminal reactive oligomer is not particularly limited and is usually about 2000. The upper limit is not particularly limited and is about 10000. The molecular weight is preferably 500 to 10000, particularly preferably 1000 to 5000. The terminal reactive oligomer is preferably a substantially linear oligomer. An oligomer having a relative low molecular weight may be an oligomer having a branch, or may be a trifunctional or higher functional oligomer having a branch and having a reactive functional group at each terminal.

In the multiple glazing 11 according to the second embodiment of the present invention, preferred as the terminal reactive oligomer are a 1-butene homopolymer, an isoprene homopolymer, a copolymer of 1-butene and isoprene, a hydride of a butadiene homopolymer (1,2-polybutadiene or 1,4-polybutadiene), and a copolymer of one or more types of a C₄ monomer such as 1-butene, isoprene or butadiene, and pentadiene, styrene or the like, and its hydride. Most preferred as the terminal-reactive oligomer are a hydride of a butadiene homopolymer and an isoprene homopolymer.

The functional group in the terminal-reactive oligomer may, for example, be a hydroxy group, a carboxy group, an amino group, a mercapto group, an epoxy group or an isocyanate group. A hydroxy group or a carboxy group is preferred, and a hydroxy group is particularly preferred.

The compound reactive with the terminal functional group of the oligomer may be a compound having two or more functional groups reactive with the functional group of the terminal-reactive oligomer.

For example, an oligomer having a hydroxy group at its terminal may be reacted with a chain extender formed of a polyisocyanate to be a polyurethane, and may be reacted with a polycarboxylic acid or its acid chloride or alkyl ester to be a polyester. Likewise, an oligomer having a carboxy group at its terminal may be reacted with a polyol, a polyamine or a polyepoxide, and an oligomer having an amino group at its terminal may be reacted with a polyepoxide, a polycarboxylic acid or its anhydride. In the multiple glazing 11 according to the second embodiment of the present invention, a particularly preferred combination of the terminal-reactive oligomer and the compound reactive with the terminal functional group of the oligomer is a combination of the oligomer having a hydroxy group at its terminal and a polyisocyanate or a polycarboxylic acid or its reactive acid derivative.

To the above adhesive, a silane coupling agent may be incorporated as the case requires. As described above, a silane coupling agent is used to increase the adhesion to glass.

The silane coupling agent may, for example, be an epoxy silane such as 3-glycidoxypropyltrimethoxysilane or 3-glycidoxypropyltriethoxysilane, or an aminosilane, such as 3-aminopropyltrimethoxysilane, 3-aminopropylethoxysilane or 3-triethoxysilyl-N-(1,3-dimethyl-butylidene)propylamine.

Further, to the above additive, as the case requires, an additive such as an antioxidant, a wetting gent or a defoaming agent, or an organic solvent, may be incorporated.

### [Production method]

Now, a method for producing the multiple glazing 10, 11 according to the first and second embodiments of the present invention will be described.

Fig. 3 is a view illustrating an example of a glass plate disposition step. The glass plate disposition step is a step of disposing the two glass plates 1a and 1b so as to face each other. In production of the multiple glazing 11 according to the second embodiment, prior to this step, a step of applying the adhesive to a region on which the spacer 20 is to be provided to form the adhesive layer 40 is conducted. As shown in Fig. 2, as the case requires, the adhesive layer 40 may be provided on a region wider than the spacer 20, that is on a region including and wider than the spacer 20, or on the contrary, may be provided on a region narrower than the spacer 20. Further, needless to say, the adhesive layer 40 may be formed on the same region as the spacer 20. After the adhesive is air-dried, as shown in Fig. 3, the two glass plates 1a and 1b are held at a predetermined distance (for example 6 mm, 12 mm). The distance between the two glass plates 1a and 1b may be determined depending upon the application and is not limited thereto.

On the other hand, in production of the multiple glazing 10 according to the first embodiment, two non-coated glass plates 1a and 1b are disposed at a predetermined distance to face each other.

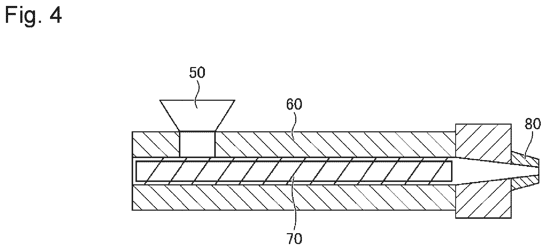

Then, as shown in Fig. 4, using a general purpose extruder having a cylinder with an appropriate diameter, the above described thermoplastic resin composition is melted for example at a temperature of 150°C or lower, for example at a predetermined temperature within a range of 110 to 150°C, extruded from a die having an appropriate tip shape and interposed between the two glass plates so as to be cooled. The extruder may be a conventional extruder and may have, as shown in Fig. 4, a structure such that the molten thermoplastic resin composition is supplied from a hopper 50, and the molten thermoplastic resin composition supplied to a barrel 60 is pushed ahead by a screw 70 and extruded from a die 80 at the tip to a predetermined region.

If the spacer material has a high viscosity, it is necessary to heat the thermoplastic resin to high temperature of about 200°C or higher. Whereas the thermoplastic resin composition used for the multiple glazing 10, 11 according to the present embodiment, is so constituted as to be extruded at a temperature of 150°C or lower, and thus it is possible to extrude and fill the spacer 20 in a predetermined region between the two glass plates 1a and 1b at low temperature. Otherwise, the thermoplastic resin composition may be formed on the glass plate 1a at a temperature of 150°C or lower, and the glass plate 1b is placed thereon and pressed to be integrated. Further, with the thermoplastic resin composition to be used for the multiple glazing 10, 11 according to the present embodiment, deformation of the spacer 20 after extrusion can be suppressed. After the molten thermoplastic resin composition is supplied to the predetermined region between the glass plates 1a and 1b, the two glass plates 1a and 1b are pressed from outside and fixed. In such a state, the thermoplastic resin composition is cooled and solidified to form the spacer 20. Thus, the multiple glazing 10, 11 as shown in Fig. 1 or 2 is completed. The thermoplastic resin composition, which has already reached high temperature at the time of pressurizing, may not be heated or may further be heated.

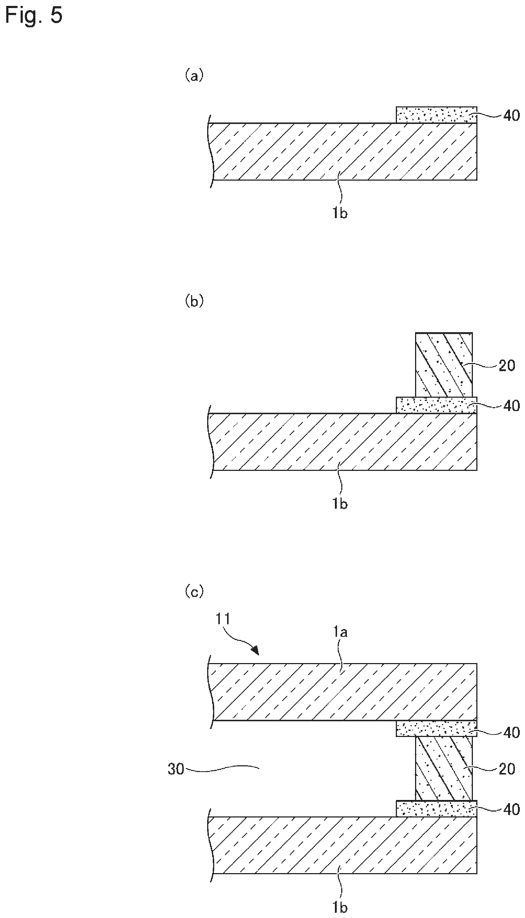

Fig. 5 is a view illustrating a first method for producing the multiple glazing 11 according to the second embodiment of the present invention.

Fig. 5(a) illustrates an example of an adhesive coating step. In the adhesive coating step, an adhesive is applied to a predetermined region at an outer peripheral region of the glass plate 1b to form an adhesive layer 40.

The method of applying the adhesive is not particularly limited and may be any method such as coating by a brush, coating by a cloth, coating by a material having a solid shape such as a felt, spray coating, or coating by dropping may be conducted. By coating by an impregnating material such as a brush, a cloth or a felt, it is possible to draw a predetermined region on the glass plate 1b by an impregnating member impregnated with the adhesive. On the other hand, by coating by spraying or dropping, it is possible to directly spray or drop the adhesive from above the glass plate 1b. Further, in the case of spraying, spraying from above the glass plate 1b is not necessarily required, and it is also possible to apply the adhesive to the glass plate 1b positioned vertically or at a slant. As described above, the adhesive can be applied to the surface of the glass plate 1b by various methods and means according to the application.

The present embodiment is described with reference to an example in which the multiple glazing 11 in Fig. 2 is to be produced, and thus the coating region is wider than the region on which the spacer 20 is to be formed. However, the coating region can also be properly changed depending upon the application. For example, the adhesive may be applied to a region narrower than the region on which the spacer 20 is to be formed, or the adhesive may be applied to the same region as the spacer 20. The adhesive coating region can also be changed depending upon the application.

Fig. 5(b) is a view illustrating an example of a spacer bonding step. In the spacer bonding step, the spacer 20 is bonded to the adhesive layer 40 formed on the glass plate 1b. The spacer 20 is, as described above, formed of the thermoplastic resin material containing the butyl-based rubber. For example as described above, the spacer 20 may be preliminarily formed of the resin material, and the formed spacer 20 is pressed on the adhesive to be bonded. On that occasion, the spacer 20 is set to have a temperature of 110°C or higher and150°C or lower. That is, the once formed spacer 20 is bonded to the glass plate 1b in a molten state.

Heretofore, the spacer 20 has been heated to high temperature of 200°C or higher, however, in the present embodiment, the spacer 20 is heated to 150°C or lower. By heating the spacer 20 to 150°C or lower, the cooling time after boding can be shortened and the productivity can thereby be improved. Further, the spacer 20 has a viscosity with which the spacer can easily be molded, and can thereby be easily formed into a predetermined shape.

By applying the spacer 20 at 110°C or higher, the spacer 20 tends to easily deform and be easily formed. By bonding the spacer 20 at 50°C or higher and 160°C or lower using the adhesive, the spacer 20 can be bonded in an easily formable state, and in addition, the cooling time after bonding can be shortened and the productivity can be increased.

The temperature of the spacer 20 is not limited so long as it is 110°C or higher and 150°C or lower, but is preferably 150°C or lower, more preferably 145°C or lower. This is because the lower the temperature is, the less the spacer 20 will be deteriorated, and the more the spacer 20 cooling time can be shortened. The temperature of the spacer 20 is preferably 110°C or higher, more preferably 120°C or higher, whereby the spacer 20 easily deforms and is easily be formed.

It is preferred that 30 seconds to 20 minutes after the application of the adhesive to the glass plate 1b, the spacer 20 is bonded to the glass plate 1b. That is, by using for the spacer 20 the above described butyl-based rubber comprising the high molecular weight butyl-based rubber and the low molecular weight butyl-based rubber, the adhesive and the spacer 20 are highly compatible, and thus favorable adhesion can be achieved even though the adhesive applied is thin. By applying the adhesive thin, the adhesive will dry within 20 minutes, and the spacer 20 can quickly be bonded to the glass plate 1b. Thus, the production time can be shortened. Heretofore, the thickness of the adhesive applied has been larger than 50 µm and thus it has taken 30 minutes or longer from application to drying.

On the other hand, according to the present production method, the adhesive is applied to the glass plate 1b and 30 seconds to 20 minutes later, the spacer 20 can be bonded to the glass plate 1b. When the waiting time after the application of the adhesive to the glass plate 1b is at a level of 30 seconds to 1 minute, it is possible to automate the process and automated production of the multiple glazing 11 becomes possible.

As described above, the thickness of the adhesive is preferably 50 µm. As described above, by using the butyl-based rubber with a low viscosity for the spacer 20, the adhesive and the spacer 20 are well compatible, and the thickness of the adhesive can be made small. Thus, the adhesive dries in a short time of 30 seconds to 20 minutes, and the productivity can be improved.

As described above, in the first production method, the time from the adhesive coating step in Fig. 5(a) to the spacer bonding step in Fig. 5(b) can remarkably be shorter than before, and the productivity can be improved.

Fig. 5(c) illustrates an example of a glass plate bonding step. In the glass plate bonding step, another glass plate 1a is bonded to the spacer 20. The glass plate 1a, which has an adhesive layer 40 formed on a predetermined region on its outer peripheral region, is bonded to the spacer 20. The adhesive of the adhesive layer 40 here may be the same as that of the adhesive layer 40 on the glass plate 1b, and the coating region to be coated with the adhesive may also be the same as the coated region on the glass plate 1b.

The timing of the application of the adhesive to the glass plate 1a may be the same as or may be different from the timing of the application of the adhesive to the glass plate 1b. For example, the adhesive may be applied to the glass plate 1b first and the adhesive is applied to the glass plate 1a while the spacer bonding step is conducted. Otherwise, the glass plates 1a and 1b may be disposed side by side, and the adhesive is applied to the glass plates 1a and 1b substantially simultaneously. On the other hand, it is also possible to apply the adhesive to the glass plate 1a first and then apply the adhesive to the glass plate 1b. The timing of the application of the adhesive to the glass plate 1a is properly set depending upon the application and the coating apparatus.

The method and the means of applying the adhesive to the glass plate 1a may be properly selected depending upon the application, as described for Fig. 3(a). The explanation is made for Fig. 3(a) and the explanation here is omitted.

In the glass bonding step, as the case requires, the glass plate 1a may be pressurized. The glass plate 1a may be pressurized from above the glass plate 1a or the glass plate 1a may be pressurized from both sides of the glass plates 1a and 1b. By pressurization, adhesion between the glass plates 1a, 1b and the spacer 20 can be secured and at the same time, the position of the glass plates 1a, 1b and the spacer 20 can be fixed.

Once the spacer 20 is heated to 110°C or higher and 150°C or lower in the spacer bonding step, the glass plate bonding step can be conducted without further heating the spacer 20. So long as the temperature of the spacer 20 is set to 110°C or higher and 150°C or lower during the spacer bonding step, the glass plate 1a can be bonded to the spacer 20 even if the temperature of the spacer 20 decreases after the spacer bonding step, and such a temperature decrease is not problematic at all in production.

The explanation is made with reference to a case where the multiple glazing 11 including two glass plates 1a and 1b is to be produced in Fig. 5. In production of the multiple glazing 11 including three, four or more glass plates, a step of applying the adhesive on the glass plate 1a, bonding a new spacer 20 and further bonding a glass plate on the spacer 20, should be added. That is, the steps in Fig. 5(a) to (c) are repeated depending upon the number of the glass plates constituting the multiple glazing 11.

In this way, according to the first production method, the adhesive can be dried in a short time, and the productivity can be improved.

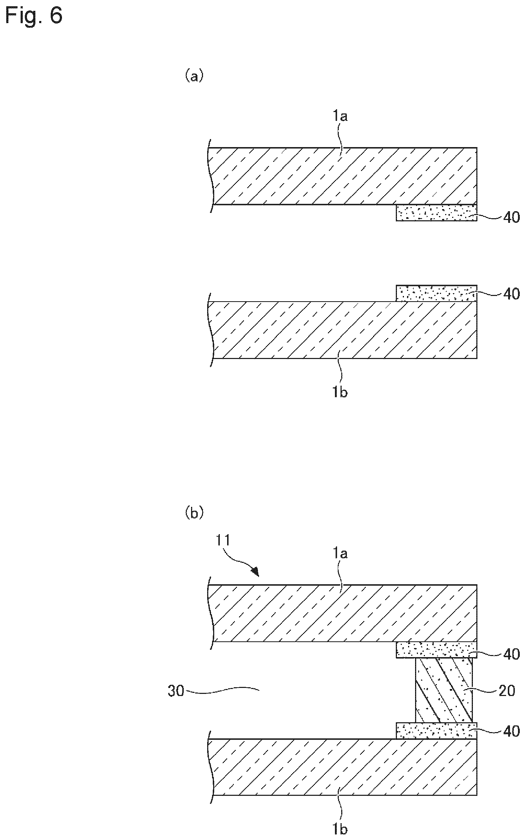

Fig. 6 is views illustrating a second method for producing the multiple glazing according to the second embodiment of the present invention.

Fig. 6(a) illustrates an example of a glass plate disposition step. In the glass plate disposition step, the two glass plates 1a and 1b each having the adhesive layer 40 formed thereon are disposed to face each other. Needless to say, they are disposed so that the adhesive-coated regions each coated with the adhesive face each other.

Prior to the glass plate disposition step, the adhesive coating step described for Fig. 5(a) is conducted on each of the glass plates 1a and 1b. Then, the glass plates 1a and 1b each coated with the adhesive are disposed to face each other.

Fig. 6(b) illustrates an example of the spacer bonding step. In this case, the spacer 20 is formed by extruding the molten butyl-based rubber thermoplastic resin material between the two glass plates 1a and 1b facing each other. For example, using the above described butyl-based rubber comprising the high molecular weight butyl-based rubber and the low molecular weight butyl-based rubber, as the material for the spacer, the butyl-based rubber can be extruded at low temperature of about 110 to 150°C, whereby the spacer bonding step can readily be conducted.

In the spacer bonding step, as the case requires, the glass plate 1a or the glass plates 1a and 1b may be pressurized. As the pressurizing method, the method described for Fig. 5(c) is applicable as it is, and the explanation is omitted.

The spacer bonding step in Fig. 6(b) is a step of filling and forming the spacer 20 between the glass plates 1a and 1b each coated with the adhesive, not bonding the formed spacer, and thus may also be called a spacer filling step or a spacer forming step.

In the second production method also, by repeating the steps in Figs. 6(a) and 6(b), it is possible to produce a multiple glazing 11 having three, four or more glass plates 1a, 1b. This is the same as described for the first production method and the explanation is omitted.

In the second production method also, the adhesive can be dried in a short time and the productivity can thereby be improved.

In either of the first and the second production methods, the adhesion coated region and the spacer 20 bonding region are properly combined depending upon the application.

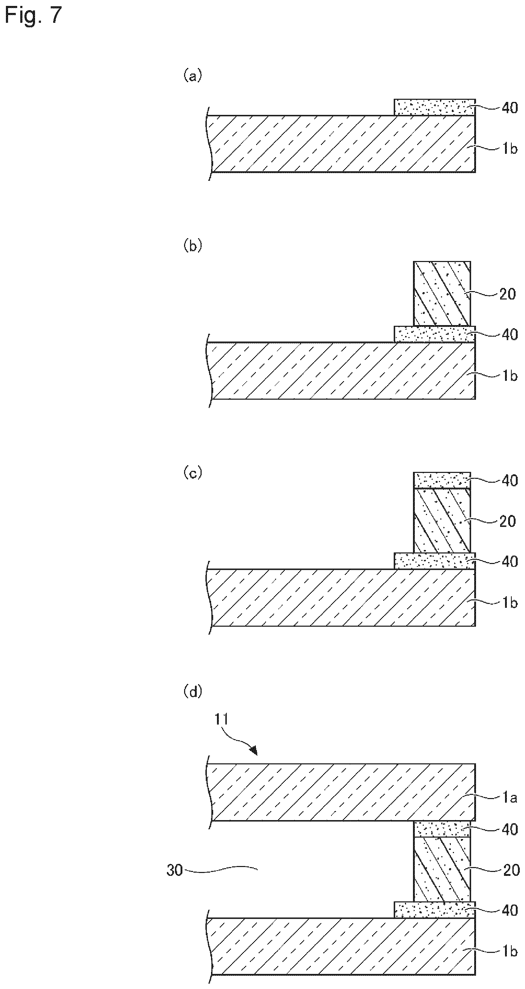

Fig. 7 is views illustrating a third method for producing the multiple glazing according to the second embodiment of the present invention. In the third production method, the same constituents as in the first and second production methods are designated by the same reference symbols and their explanation is omitted.

Fig. 7(a) illustrates an example of a step of coating the glass plate with the adhesive. In the step of coating the glass plate with the adhesive, the adhesive is applied to a predetermined region at an outer peripheral region of the glass plate 1b to form the adhesive layer 40. The step of coating with the adhesive is the same as that in Fig. 5(a) in the first production method, and the explanation for Fig. 5(a) is applicable as it is. Thus, explanation in detail of the step of coating with the adhesive is omitted.

Fig. 7(b) illustrates an example of a spacer bonding step. In the spacer bonding step, the spacer 20 is bonded on the adhesive layer 40 formed on the glass plate 1b. The spacer bonding step is the same as that in Fig. 5(b) in the first production method, and the explanation for Fig. 5(b) is applicable as it is. Thus, explanation in detail of the adhesive coating step is omitted.

Fig. 7(c) illustrates an example of a step of coating the spacer with the adhesive. In the step of coating the spacer with the adhesive, the adhesive is applied to the upper side of the spacer 20, that is, the adhesive is applied to an opposite side of the spacer 20 from the face bonded to the glass plate 1b via the adhesive, to form the adhesive layer 40. That is, the adhesive is applied to a surface of the spacer 20 to which the glass plate 1b is not bonded, the surface being in parallel with the glass plate 1b.

In the first and the second production methods, the adhesive is applied to the glass plate 1a sandwiching the spacer 20, however, the third production method is different from the first and the second production methods in that the adhesive is applied to the spacer 20, not to the glass plate 1a. As shown in Fig. 7(c), the area of the spacer 20 is of course smaller than the glass plate 1b, and thus the adhesive is applied to such an extent that the adhesive does not spill and flow onto the side surfaces of the spacer 20.

The thickness of the adhesive may be 50 µm and is preferably set, for example, to a range of 20 to 30 µm. The spacer 20 has a surface roughness larger than the surface of the glass plate 1a, and thus by applying the adhesive slightly thick, the adhesive can function as a surface roughness buffer, and can make a favorable surface state of the spacer 20. Thus, bonding of the glass plate 1a in the subsequent step can be conducted in a favorable state.

Fig. 7(d) illustrates an example of a glass plate bonding step. In the glass plate bonding step, another glass plate 1a is bonded to the spacer 20 coated with the adhesive. In this case, the glass plate 1a, which is not coated with the adhesive, is bonded to the spacer 20 in a state where only the spacer 20 is coated with the adhesive.

In this way, the second glass plate 1a, not coated with the adhesive, may be bonded to the spacer 20, coated with the adhesive. In this case, the multiple glazing 11 can be produce by sequentially piling up components from one direction (from below in Fig. 7), whereby the workability can be improved. Further, no space is required for applying the adhesive to the glass plate 1a, thus leading to space saving in production of the multiple glazing. And, the area of the adhesive layer 40 to bond the second glass plate 1a and the spacer 20 can be minimized, thus reducing the amount of the adhesive used. It is also possible to prevent the adhesive from leaking into unnecessary portions, thus leading to improved appearance of the multiple glazing, although the adhesive layer 40 is on the inner surface of the air layer 15.

The adhesive in the step of coating the glass plate with the adhesive in Fig. 7(a) and the adhesive in the step of coating the spacer with the adhesive in Fig. 7(c) may be the same. In either step, the adhesive is used to bond the glass plate 1a or 1b and the spacer 20, that is the adhesives in both steps are used to bond objects of the same type.

The method and the means of applying the adhesive to the glass plate 1b and the spacer 20 may properly be selected depending upon the application, as described for Fig. 5(a). The explanation is made for Fig. 5(a) and the explanation here is omitted.

In the same manner as in the first embodiment, in the glass bonding step, as the case requires, the glass plate 1a may be pressurized. The glass plate 1a may be pressurized from above the glass plate 1a or the glass plate 1a may be pressurized from both sides of the glass plates 1a and 1b. By pressurization, adhesion between the glass plates 1a, 1b and the spacer 20 can be secured and at the same time, the position of the glass plates 1a, 1b and the spacer 20 can be fixed.

The explanation is made with reference to a case where the multiple glazing 11 including two glass plates 1a and 1b is to be produced in Fig. 7. In production of the multiple glazing 11 including three, four or more glass plates, a step of applying the adhesive to the glass plate 1a, bonding a new spacer 20, applying the adhesive to the spacer 20 and further bonding a glass plate, should be added. That is, the steps in Fig. 7(a) to (d) are repeated depending upon the number of the glass plates constituting the multiple glazing 11.

In this way, according to the third embodiment, a series of steps that is the step of coating the glass plate with the adhesive, the spacer bonding step, the step of coating the spacer with the adhesive and the glass plate bonding step may be conducted by similar operation on the basis of coating, and the workability and the productivity can be improved.

Such a piling method is an example, and the method for producing the multiple glazing of the present invention itself is not limited to the above method. For example, a spacer having a desired shape may preliminarily be formed from the resin composition, and the spacer is heat bonded between two glass plates for example.

### EXAMPLES

Now, examples for preparing the multiple glazing according to the present embodiment will be described.

### Examples of resin composition for spacer

Compositions in Examples 1 to 5 and Comparative Examples 1 to 3 are illustrated in Table 1. The composition in Comparative Example 3 is similar to the composition in Composition Example 7 described as Example of Patent Document 1. The values are mass ratios per 100 parts by mass. With respect to the butyl-based rubber, 5 types of butyl-based rubbers differing in the number average molecular weight are used, and the compositions including the respective types are shown.

**Table 1**

| | | Number average molecular weight Mn | Weight average molecular weight Mw | Proportion (wt%) | | | | | | | |
|---|---|---|---|---|---|---|---|---|---|---|---|
| | | | | Ex. 1 | Ex. 2 | Ex. 3 | Ex. 4 | Ex. 5 | Comp. Ex. 1 | Comp. Ex. 2 | Comp. Ex. 3 |
| High molecular weight butyl rubber | PIB-A | 196212 | 700504 | | | | | | 10.0 | 13.8 | |
| | IIR-A | 56088 | 339114 | 14.9 | 15.0 | 13.3 | 14.0 | 16.2 | | | 17.7 |
| | IIR-B | 77041 | 423059 | 2.6 | 2.7 | 4.4 | 3.5 | 1.3 | | | |
| Low molecular weight butyl rubber | PIB-B | 38966 | 96783 | | | | | | | | 17.7 |
| | PIB-C | 27304 | 70332 | 17.5 | 17.7 | 17.7 | 17.5 | 17.5 | 40.0 | 17.0 | |
| Crystalline polyolefin | HDPE | | | | | | | | | | |
| | LDPE | | | 2.8 | 2.8 | 2.8 | 2.8 | 2.8 | | | 1.8 |
| Tackifier | Tackifier | | | 9.6 | 8.8 | 8.8 | 9.6 | 9.6 | | 10.6 | 10.6 |
| Inorganic filler | Talc | | | 19.7 | 19.9 | 19.9 | 19.7 | 19.7 | 20.0 | 26.6 | 19.9 |
| | Carbon black | | | 10.5 | 10.6 | 10.6 | 10.5 | 10.5 | 18.0 | 10.6 | 10.6 |
| Drying agent | 3A zeolite powder | | | 21.9 | 22.1 | 22.1 | 21.9 | 21.9 | 12.0 | 21.4 | 21.2 |
| Additive | Antioxidant | | | 0.4 | 0.4 | 0.4 | 0.4 | 0.4 | | | 0.4 |
| Total | | | | 100.0 | 100.0 | 100.0 | 100.0 | 100.0 | 100.0 | 100.0 | 100.0 |

In Table 1, high molecular weight butyl-based rubber PIB-A is a polyisobutylene having a number average molecular weight Mn of 19612 and a weight average molecular weight Mw of 700504, high molecular weight butyl-based rubber IIR-A is a butyl rubber having a number average molecular weight Mn of 56088 and a weight average molecular weight Mw of 339114, high molecular weight butyl-based rubber IIR-B is a butyl rubber having a number average molecular weight Mn of 77041 and a weight average molecular weight Mw of 423059, low molecular weight butyl-based rubber PIB-B is a polyisobutylene having a number average molecular weight Mn of 38966 and a weight average molecular weight Mw of 96783, and low molecular weight butyl-based rubber PIB-C is a polyisobutylene having a number average molecular weight Mn of 27304 and a weight average molecular weight Mw of 70332.

The number average molecular weights Mn and the weight average molecular weights Mw of such butyl-based rubbers were measured by means of a size exclusion chromatography apparatus manufactured by Tosoh Corporation (main body: HLC-8220GPC, RI detector, guard column: TSKgen guardcolumn SuperHZ-L, column: TSKgen SuperHZ2000, TSKgel SuperHZ2500, TSKgel SuperHZ4000) using THF as a solvent and a polystyrene standard sample as a reference.

As the crystalline polyolefin, HDPE means a high density polyethylene having a melt flow rate MFR of 20 g/10 min (in accordance with JIS K6922-2) and a melting point of 133°C. As HDPE, Novatec (registered trademark) manufactured by Japan Polyethylene Corporation, injection grade HJ491 was used. LDPE means a low density polyethylene having a melt flow rate MFR of 45 g/10 min (in accordance with JIS K6922-2) and having a melting point of 102°C. Further, modified PE means a polyethylene having an acid anhydride and an acrylic acid ester introduced, having a melt flow rate MFR of 80 g/10 min (in accordance with JIS K6922-2) and a melting point of 98°C. As LDPE, Novatec (registered trademark) manufactured by Japan Polyethylene Corporation, injection grade LJ902 was used.

As the tackifier, a DCPD (dicyclopentadiene) hydrogenated hydrocarbon resin, having a softening point of 125°C, was used.

As the inorganic filler, an inorganic filler containing talc having an average particle size of 2 µm and HAF (High Abrasion Furnace) carbon black was used.

As the drying agent, 3A zeolite powder was used. As the additive, a phenolic antioxidant was used.

The components for each composition shown in Table 1, excluding the drying agent, were kneaded to obtain a thermoplastic resin composition having a JIS A hardness of 10 to 90, and dry 3A zeolite powder as the drying agent were added, followed by kneading to uniformly disperse the drying agent thereby to obtain a thermoplastic resin composition for the spacer.

In measurement of the components in the spacer after molding, the composition is heated to 1000°C in an air atmosphere by means of a TGA (thermogravimetric analysis) apparatus, whereby proportions of a resin component that decomposes up to 400°C, carbon black that decomposes at 400 to 700°C, and a heat resistant component that does not decompose even at 1000°C are obtained. The heat resistant component contains talc and zeolite, and proportions of talc and zeolite are obtained from the amounts of Mg contained in talc and Al contained in zeolite. The resin component contains the butyl-based rubber, the polyolefin and the tackifier, and by dissolving the resin composition in hexane and removing insoluble matters by filtration, proportions of the butyl-based rubber soluble in hexane and the tackifier are obtained. The proportions of the butyl-based rubber and the tackifier can be confirmed by NMR. Whether the butyl-based rubber is blended can be judged by GPC (gel permeation chromatography) analysis. The proportion of the crystalline polyolefin can be calculated from a difference between the resin compound that decomposes up to 400°C by TGA (thermogravimetric analysis) and the butyl-based rubber soluble in hexane. The number average molecular weight Mn and the weight average molecular weight Mw of the butyl-based rubber may be measured by a size exclusion chromatography apparatus.

Table 2 shows values calculated from the whole composition shown in Table 1. The proportions of the butyl-based rubber, the crystalline polyolefin and the inorganic filler, and the total proportion of the inorganic filler and the drying agent, to the total amount of the sealing material, and the proportion of the crystalline polyolefin to the total amount of the butyl-based rubber and the crystalline polyolefin, are shown.

**Table 2**

| | Ex. 1 | Ex. 2 | Ex. 3 | Ex. 4 | Ex. 5 | Comp. Ex. 1 | Comp. Ex. 2 | Comp. Ex. 3 |
|---|---|---|---|---|---|---|---|---|
| Proportion of butyl-based rubber to the total amount of sealing material (wt%) | 35.1 | 35.4 | 35.4 | 35.1 | 35.1 | 50.0 | 27.6 | 35.4 |
| Proportion of crystalline polyolefin to the total amount of sealing material (wt%) | 2.8 | 2.8 | 2.8 | 2.8 | 2.8 | 0.0 | 0.0 | 1.8 |
| Proportion of inorganic filler to the total amount of sealing material (wt%) | 30.2 | 30.5 | 30.5 | 30.2 | 30.2 | 38.0 | 37.2 | 30.5 |
| Total proportion of inorganic filler and drying agent to the total amount of sealing material (wt%) | 52.1 | 52.6 | 52.6 | 52.1 | 52.1 | 50.0 | 58.6 | 51.8 |
| Proportion of crystalline polyolefin to total amount of butyl-based rubber and crystalline polyolefin (wt%) | 7.3 | 7.3 | 7.3 | 7.3 | 7.3 | 0.0 | 0.0 | 4.9 |

Tables 3 shows the number average molecular weight Mn, the weight average molecular weight Mw, and the ratio of the weight average molecular weight to the number average molecular weight, Mw/Mn, obtained from the composition of the butyl-based rubber shown in Table 1.

**Table 3**

| | Ex. 1 | Ex. 2 | Ex. 3 | Ex. 4 | Ex. 5 | Comp. Ex. 1 | Comp. Ex. 2 | Comp. Ex. 3 |
|---|---|---|---|---|---|---|---|---|
| Number average molecular weight Mn | 48,090 | 47,498 | 46,413 | 46,991 | 48,620 | 18,075 | 46,622 | 63,007 |
| Weight average molecular weight Mw | 212,026 | 209,637 | 214,745 | 214,218 | 210,329 | 88,825 | 251,351 | 227,486 |
| Ratio of weight average molecular weight to number average molecular weight Mw/Mn | 4.409 | 4.414 | 4.627 | 4.559 | 4.326 | 4.914 | 5.391 | 3.610 |

The proportions of the high molecular weight butyl-based rubber and the low molecular weight butyl-based rubber in each of Examples 1 to 5 were respectively about 20 parts by mass. It is found from Table 2 that in Examples 1 to 5, the proportion of the crystalline polyolefin to the total amount of the sealing material is 1 wt% or more and 5 wt% or less, and the proportion of the crystalline polyolefin to the total amount of the butyl-based rubber and the crystalline polyolefin is 2 wt% or more and 12 wt% or less. Further, it is found from Table 3 that in Examples 1 to 5, of the butyl-based rubber, the number average molecular weight is 45000 or more and 60000 or less, the weight average molecular weight is 200000 or more and 225000 or less, and the ratio of the weight average molecular weight to the number average molecular weight is 4.0 or higher and 5.0 or lower.

Whereas in Comparative Examples 1 to 2, the proportion of the crystalline polyolefin to the total amount of the sealing material is less than 1 wt%, and the proportion of the crystalline polyolefin to the total amount of the butyl-based rubber and the crystalline polyolefin is less than 2 wt%. Further, in Comparative Example 1, of the butyl-based rubber, the number average molecular weight is less than 45000, and the weight average molecular weight is more than 225000. In Comparative Example 2, the weight average molecular weight is more than 225000, and the ratio of the weight average molecular weight to the number average molecular weight is more than 5.0. In Comparative Example 3, of the butyl-based rubber, the number average molecular weight is more than 60000, the weight average molecular weight is more than 225000, and the ratio of the weight average molecular weight to the number average molecular weight is less than 4.0.

Table 4 shows the JIS A hardness at 25°C, and results of evaluation of the loss tangents tanδ at 190°C and 150°C, the melt viscosity at 120°C, the shear rate at 150°C, and the hardness at room temperature, using the thermoplastic resin composition for the spacer in each of Examples 1 to 5 and Comparative Examples 1 to 3.

**Table 4**

| | Temperature | Ex. 1 | Ex. 2 | Ex. 3 | Ex. 4 | Ex. 5 | Comp. Ex. 1 | Comp. Ex. 2 | Comp. Ex. 3 |
|---|---|---|---|---|---|---|---|---|---|
| Loss tangent tanδ | 150°C | 1.17 | 1.19 | 1.15 | 1.18 | 1.19 | 1.06 | 1.05 | 1.29 |
| | 190°C | 1.32 | 1.31 | 1.29 | 1.30 | 1.34 | 0.90 | 1.20 | 1.44 |
| | 90 to 190°C | Monotonic increase | Monotonic increase | Monotonic increase | Monotonic increase | Monotonic increase | Peak at 130 to 140°C | Monotonic increase | Monotonic increase |
| Melt viscosity [kPa·s] | 120°C | 4.5 | 4.2 | 4.5 | 4.5 | 5.0 | 3.0 | 6.0 | 5.0 |
| | 150°C | 2.5 | 2.3 | 2.0 | 2.3 | 2.6 | 1.8 | 3.0 | 3.0 |
| Hardness | 25°C | 80.2 | 81.8 | 83.0 | 81.6 | 82.0 | 70.0 | 76.0 | 76.0 |

The loss tangent tanδ is measured in accordance with JIS K6394:2007. The loss tangent tanδ was measured with respect to a sample with a diameter of 25 mm and a thickness of 0.6 mm using a viscoelasticity measurement apparatus MCR301 manufactured by Anton Paar, in shear mode at a frequency of 1 Hz at a temperature of 60°C to 190°C with a strain of 5%.

The melt viscosity was measured using capilograph 1C manufactured by Toyo Seiki Seisaku-sho, Ltd, and using a capillary with a length of 10 mm and a diameter of 2 mm. As a furnace, a furnace with a diameter of 9.55 mm was used. The melt viscosity at a temperature of 150°C at a shear rate of 100/s was taken as a reference.

As shown in Table 4, in Examples 1 to 5, the JIS A hardness at 25°C was 10 or more and 90 or less, the loss tangent at 190°C at 1Hz was 1.25 or more and 1.42 or less, the loss tangent at 150°C at 1Hz was 1.08 or more and 1.27 or less, the loss tangent monotonically increased from 90°C to 190°C, the melt viscosity at 150°C was 0.6 kPa·s or more and 3.5 kPa·s or less, and the shear rate at 150°C was 3.5 or less. Accordingly, deformation of the thermoplastic resin composition in each of Examples 1 to 5 immediately after extrusion can be suppressed, while maintaining moldability at low temperature.

Whereas in Comparative Example 1, the butyl-based rubber, that has a small number average molecular weight, has high flowability when heated and has a loss tangent with a peak at 130 to 140°C, thus has a remarkably increased flowability at 140°C or higher, and thus, it is very difficult to control the shape at the time of melt-molding the thermoplastic resin composition. In Comparative Example 2, the loss tangent monotonically increases from 90 to 190°C and the loss tangent at 190°C at 1Hz is less than 1.25, whereby the flowability of the thermoplastic resin composition at the time of melt-molding is insufficient. In Comparative Example 3, the loss tangent at 190°C at 1Hz is more than 1.42, and deformation of the thermoplastic resin composition immediately after extrusion at the time of melt-molding is large, thus leading to poor shape-controlling property. Thus, it is found that in Comparative Examples 1 to 3, the object of the present invention can not be achieved that deformation immediately after extrusion is suppressed while maintaining moldability at low temperature.

### Examples of multiple glazing

A multiple glazing was prepared by using the thermoplastic resin composition for the spacer in each of the above Examples 1 to 5 and Comparative Examples 1 to 3.

**In** each Example, the thermoplastic resin composition of the spacer material was extruded between outer peripheral portions of two float glass plates of 350 × 500 mm × 5 mm in thickness, disposed at a distance of 12 mm or 16 mm, each having regions which the spacer would touch coated with the adhesive as the primer treatment, by using an extruder for a rubber having a cylinder with a diameter of 40 mm, to form a spacer thereby to obtain a multiple glazing 11 having the construction as shown in Fig. 2.

Table 5 illustrates results of a slippage resistance test and an accelerated durability test with respect to the multiple glazings using the thermoplastic resin compositions for the spacer in Examples 1 to 5 and Comparative Examples 1 to 3, and results of evaluation of the resin extrusion amount and the moldability at corner portions of the thermoplastic resin composition for the spacer in Examples 1 to 5 and Comparative Examples 1 to 3.

**Table 5**

| | Ex. 1 | Ex. 2 | Ex. 3 | Ex. 4 | Ex. 5 | Comp. Ex. 1 | Comp. Ex. 2 | Comp. Ex. 3 |
|---|---|---|---|---|---|---|---|---|
| Slippage resistance test | Pass | Pass | Pass | Pass | Pass | Fail | Pass | Pass |
| Accelerated durability test | Pass | Pass | Pass | Pass | Pass | Fail | Pass | Pass |
| Resin extrusion amount | Pass | Pass | Pass | Pass | Pass | Pass | Fail | Fail |
| Moldability at corner portions | Pass | Pass | Pass | Pass | Pass | Fail | Fail | Fail |

In the slippage resistance test, resistance to slippage of the two glass plates is measured upon application of a load to one of the glass plates in the multiple glazing. In the slippage resistance test, one of the glass plates of each multiple glazing with a 12 mm air layer was fixed, a load of 13 kg was applied to the other glass plate, and the downward movement of the glass plate to which the load was applied was measured at 25°C. A specimen with the downward movement of 0.5 mm or less in 20 minutes was considered to have passed.

In the accelerated durability test, the long term durability as the multiple glazing can be evaluated. The accelerated durability test was conducted with respect to each multiple glazing with a 12 mm air layer in accordance with JIS R3209:2018, Test of accelerated durability of gas sealing property of dry gas. Evaluation was made based on Class III in Test of accelerated durability of sealing, JIS R3209:2018.

The dewpoint measurement in the accelerated durability test was conducted in accordance with the apparatus and the method described in JIS R3209:2018, Dew point test of dry gas. A specimen with the dew point of -30°C or lower was considered to have passed.

A larger resin extrusion amount leads to more improved productivity. A straight pipe with a diameter of 40 mm and a length of 2 m was connected to an extruder for a rubber, having a cylinder with a diameter of 40 mm, and a nozzle of 6 mm x 16 mm was provided at the tip of the straight pipe. A specimen with the resin extrusion amount of 30 kg/h or more from the tip, at 150°C in a humidified state, was considered to have passed.

The better the moldability at corner portions is, that is the more stable and the higher the accuracy at corner portions is, the higher the production stability tends to be. Molding was conducted at glass corner portions while adjusting the extrusion amount. A specimen in such a state was considered to have passed that the corner portions were not thick as compared with edge portions and no filling failure occurred.

As shown in Table 5, the specimens in Examples 1 to 5 had passed all the tests of the slippage resistance test, the accelerated durability test, the resin extrusion amount and the corner moldability. Whereas the specimen in Comparative Example 1 had not passed the slippage resistance test, the accelerated durability test and the moldability at corner portions. In Comparative Example 1, the loss tangent had a peak in a temperature range of 90°C to 190°C, and thus in the slippage resistance test with a heavy weight for a long test time, slippage occurred. In the accelerated durability test, the thermoplastic resin composition deformed during the test and pinholes formed, and the dewpoint increased. Regarding the moldability at corner portions, viscous deformation immediately after extrusion when melted was large, and the shape could not be controlled. In Comparative Examples 2 to 3, the specimens had not passed the resin extrusion amount and the corner moldability. In Comparative Example 2, the loss tangent was small and the melt viscosity was high, and thus the flowability was insufficient, and the resin extrusion amount was small. Regarding the moldability at corner portions, the flowability was insufficient and thus forming into a desired shape was difficult, and the shape accuracy was poor. In Comparative Example 3, the loss tangent was large, and thus the shape controlling property immediately after extrusion was poor and as a result, the corner portion molding accuracy was not sufficient.

The preferred embodiments and Examples of the present invention are described above. However, it should be understood that the present invention is by no means restricted to the above embodiments and Examples, and various changes, modifications and replacements to the above embodiments and Examples were possible within the scope of the present invention.

The entire disclosure of Japanese Patent Application No. 2022-137769 filed on August 31, 2022, including specification, claims, drawings and summary is incorporated herein by reference in its entirety.

### REFERENCE SYMBOLS

1a, 1b: glass plate
10, 11: multiple glazing
20: spacer
30: air layer
40: adhesive layer
50: hopper
60: barrel
70: screw
80: die

## Claims

1. A multiple glazing having two or more glass plates spaced apart to face one another via a spacer so as to form an air layer between the glass plates, wherein
the spacer is formed of a thermoplastic resin composition having a JIS A hardness at 25°C of 10 or more and 90 or less,
the thermoplastic resin composition contains a butyl-based rubber, a crystalline polyolefin, a drying agent and an inorganic filler,
a proportion of the crystalline polyolefin to a total amount of the butyl-based rubber and the crystalline polyolefin is 2 wt% or more and 12 wt% or less,
a proportion of the crystalline polyolefin to a total amount of the thermoplastic resin composition is 1 wt% or more and 5 wt% or less,
the butyl-based rubber includes two or more types of butyl-based rubbers differing in the molecular weight,
the butyl-based rubber has a number average molecular weight of 45000 or more and 60000 or less,
the butyl-based rubber has a weight average molecular weight of 200000 or more and 225000 or less,
a ratio of the weight average molecular weight to the number average molecular weight of the butyl-based rubber is 4.0 or more and 5.0 or less,
a loss tangent at 190°C at 1Hz is 1.25 or more and 1.42 or less,
the loss tangent monotonically increases without having a peak in a temperature range of 90°C to 190°C, and
a melt viscosity at 150°C is 0.6 kPa·s or more and 3.5 kPa·s or less.

2. The multiple glazing according to Claim 1, wherein
the butyl-based rubber includes one or more types of high molecular weight butyl-based rubber and one or more types of low molecular weight butyl-based rubber,
the high molecular weight butyl-based rubber has a number average molecular weight of 55000 or more and 150000 or less,
the high molecular weight butyl-based rubber has a weight average molecular weight of 200000 or more and 650000 or less,
the low molecular weight butyl-based rubber has a number average molecular weight of 15000 or more and 50000 or less, and
the low molecular weight butyl-based rubber has a weight average molecular weight of 30000 or more and 150000 or less.

3. The multiple glazing according to Claim 2, wherein each of the high molecular weight butyl-based rubber and the low molecular weight butyl-based rubber is a butyl rubber or a polyisobutylene.

4. The multiple glazing according to Claim 1 or 2, wherein the drying agent contains zeolite with a pore size of 3Å in an amount of 50 wt% or more.

5. The multiple glazing according to Claim 1 or 2, wherein the spacer is bonded to the glass plate by an adhesive.

6. The multiple glazing according to Claim 5, wherein the adhesive is a urethane-based adhesive, and the urethane-based adhesive contains at least one of a polyol having no aromatic ring structure, a polyester polyol, a polyacrylic polyol and a urethane resin obtained by reacting a polyol and a non-yellowing isocyanate, and contains at least one of a non-yellowing isocyanate and a derivative of the non-yellowing isocyanate.

7. A sealing material for a multiple glazing that can be used for a spacer of a multiple glazing having two or more glass plates spaced apart to face one another so as to form an air layer between the glass plates,
which comprises a thermoplastic resin composition having a JIS A hardness at 25°C of 10 or more and 90 or less,
wherein the thermoplastic resin composition contains a butyl-based rubber, a crystalline polyolefin, a drying agent and an inorganic filler,
a proportion of the crystalline polyolefin to a total amount of the butyl-based rubber and the crystalline polyolefin is 2 wt% or more and 12 wt% or less,
a proportion of the crystalline polyolefin to a total amount of the thermoplastic resin composition is 1 wt% or more and 5 wt% or less,
the butyl-based rubber includes two or more types of butyl-based rubbers differing in the molecular weight,
the butyl-based rubber has a number average molecular weight of 45000 or more and 60000 or less,
the butyl-based rubber has a weight average molecular weight of 200000 or more and 225000 or less,
a ratio of the weight average molecular weight to the number average molecular weight of the butyl-based rubber is 4.0 or more and 5.0 or less,
a loss tangent at 190°C at 1Hz is 1.25 or more and 1.42 or less,
the loss tangent monotonically increases without having a peak in a temperature range of 90°C to 190°C, and
a melt viscosity at 150°C is 0.6 kPa·s or more and 3.5 kPa·s or less.

8. A method for producing a multiple glazing, which comprises:
a step of disposing two glass plates so as to face each other, and
a step of filling a material of a spacer at a temperature of 150°C or lower, in a predetermined region between the two glass plates, wherein
the spacer is formed of a thermoplastic resin composition having a JIS A hardness at 25°C of 10 or more and 90 or less,
the thermoplastic resin composition contains a butyl-based rubber, a crystalline polyolefin, a drying agent and an inorganic filler,
a proportion of the crystalline polyolefin to a total amount of the butyl-based rubber and the crystalline polyolefin is 2 wt% or more and 12 wt% or less,
a proportion of the crystalline polyolefin to a total amount of the thermoplastic resin composition is 1 wt% or more and 5 wt% or less,
the butyl-based rubber includes two or more types of butyl-based rubbers differing in the molecular weight,
the butyl-based rubber has a number average molecular weight of 45000 or more and 60000 or less,
the butyl-based rubber has a weight average molecular weight of 200000 or more and 225000 or less,
a ratio of the weight average molecular weight to the number average molecular weight of the butyl-based rubber is 4.0 or more and 5.0 or less,
a loss tangent at 190°C at 1Hz is 1.25 or more and 1.42 or less,
the loss tangent monotonically increases without having a peak in a temperature range of 90°C to 190°C, and
a melt viscosity at 150°C is 0.6 kPa·s or more and 3.5 kPa·s or less.

9. The method for producing a multiple glazing according to Claim 8, wherein
the butyl-based rubber includes one or more types of high molecular weight butyl-based rubber and one or more types of low molecular weight butyl-based rubber,
the high molecular weight butyl-based rubber has a number average molecular weight of 55000 or more and 150000 or less,
the high molecular weight butyl-based rubber has a weight average molecular weight of 200000 or more and 650000 or less,
the low molecular weight butyl-based rubber has a number average molecular weight of 15000 or more and 50000 or less, and
the low molecular weight butyl-based rubber has a weight average molecular weight of 30000 or more and 150000 or less.

10. The method for producing a multiple glazing according to Claim 9, wherein each of the high molecular weight butyl-based rubber and the low molecular weight butyl-based rubber is a butyl rubber or a polyisobutylene.

11. The method for producing a multiple glazing according to Claim 8 or 9, wherein the step of filling the material of the spacer is conducted by extrusion.

12. The method for producing a multiple glazing according to Claim 8 or 9, which further has, after the step of filling the material of the spacer, a step of pressurizing the two glass plates from outside to fix the two glass plates.

13. The method for producing a multiple glazing according to Claim 8 or 9, which further has, before the step of disposing the two glass plates so as to face each other, a step of applying an adhesive to a predetermined region of each of the two glass plates.

14. The method for producing a multiple glazing according to Claim 13, wherein the adhesive is applied to a region including the predetermined region and wider than the predetermined region.

15. The method for producing a multiple glazing according to Claim 13, wherein the adhesive is a urethane-based adhesive, and the urethane-based adhesive contains at least one of a polyol having no aromatic ring structure, a polyester polyol, a polyacrylic polyol and a urethane resin obtained by reacting a polyol and a non-yellowing isocyanate, and contains at least one of a non-yellowing isocyanate and a derivative of the non-yellowing isocyanate.
